# EUROPEAN PATENT APPLICATION

(11) **EP 2 128 830 A1**
(43) Date of publication of application: **02.12.2009**
(21) Application number: 08305219.1
(22) Date of filing: 30.05.2008
(51) Int. Cl.: G07F 7/10, H04W 8/20, G06Q 20/00

(54) **A method and an electronic device for transferring application data from a source electronic device to a destination electronic device**

(71) Applicant: GEMPLUS, 13420 Gémenos (FR)
(72) Inventor: Kiffer, Serge, 13008, MARSEILLE (FR)

(57) **Abstract**

The invention relates to a method for transferring at least one piece of application data from a source device (11) to a destination device (12).
According to the invention, the method comprises a sending step in which the source device sends at least one item of information to a transfer control device; a processing step in which the transfer control device and/or another device connected to the transfer control device processes the at least one item of information; according to a processing result, the transfer control device forbids or authorizes to transfer at least one piece of application data to the destination device by providing the destination device with at least one predetermined piece of identification data.
The invention relates also to corresponding device and system (110) for transferring at least one piece of application data to an external device.

## Description

### Field of the invention:

The invention relates to, in a general manner, a method for transferring at least one piece of application data from a source device to a destination device.

Moreover, the invention also pertains to a device for transferring at least one piece of application data.

Lastly, the invention relates to a system for transferring at least one piece of application data.

### State of the art:

According to a first solution, a remote server, as a source device, connected to a device hosting a smart card downloads an application to the smart card (as a portable electronic object or a so-termed token) as a destination device. For example, a SIM (acronym for "Subscriber Identity Module") card hosted by a mobile phone is provided with application data originating from a remote server connected Over The Air (or OTA) through a mobile radio telecommunication network.

However, such a first known solution imposes to be connected to a mobile radio telecommunication network to deliver an application to the SIM card.

According to a second known solution relating to a bank card generation process, a load of a banking application does not need to be connected to a mobile radio telecommunication network.

Nevertheless, such a second known solution has some drawbacks.

As a matter of fact, the load of the banking application requires to submit a bank card, as a destination device, to a costly producing time period. The load involves, in particular, from a bank server, as a source device, some calculations including a scoring test by which some user data has to meet requirements (set by the concerned bank) for allowing a creation of a banking application medium.

Moreover, the bank card generation is a collective process one. More exactly, a batch of bank cards is produced from a day to another day in which the application data generation is performed while needing to create associated account numbers for all the bank cards and corresponding data. Once the bank cards have been produced, they are issued, for example, through a global post mailing intended for all the owners of the corresponding bank accounts.

At the present time, there is a need to issue a token, as a destination device, one application without needing to be connected to a mobile radio telecommunication network comprising or accessing to a remote server, as a source device, while not having the drawbacks indicated with respect to the second known solution.

### Summary of the invention:

The invention proposes a solution so as to satisfy the need while not having the drawbacks stated just hereinabove by providing a method for transferring at least one piece of application data from a source device to a destination device.

According to the invention, the method comprises a sending step in which the source device sends at least one item of information to a transfer control device; a processing step in which the transfer control device and/or another device connected to the transfer control device processes the at least one item of information; according to a processing result, the transfer control device forbids or authorizes to transfer application data to the destination device by providing the destination device with at least one predetermined piece of identification data.

The principle of the present invention is to involve one transfer controller (or transfer control device) between one device storing one application, as an existing medium, and one device to which application is to be loaded, as a medium to be created or updated, while identifying it, as a recipient, with a particular piece of data assigned by the transfer controller.

More precisely, the transfer controller and/or another device connected to this latter firstly checks from the received item of information notably that at least one application data piece is already existing and stored within a source (electronic) device, as the existing medium. Then, the transfer controller and/or another device connected to this latter, analyses, on the basis of the received item of information, an opportuneness for authorizing or not to transfer at least one piece of application data to a destination (electronic) device.

Advantageously, either the existing medium itself or another device, as the source device, connected to the existing medium has provided the transfer controller with at least one piece of data relating to an identity specific to a medium of some application data.

It is to be noted that the invention transfer of at least one piece of application data includes a transfer of application code and/or a transfer of data relating to the destination device user.

When the existing medium of the application is recognized by the transfer controller, i.e. the existing medium is known to the transfer controller, then the transfer controller allows, when applicable, the loading of the existing piece of application data and/or a generated piece of application data into a recipient, as the destination device.

The authorization for transferring application data is under the control of the sole transfer controller that can check the state of existing of a first medium of application data and one or several conditions for a delivering of the application data to a destination device. Such a condition(s) is(are) configurable and defined according to a transfer control as desired.

In such a manner, an issuer of an application that also controls the transfer controller has the full control of the whole process for transferring application data to a targeted electronic device, as the destination device. Thus, no third party is involved within the invention transfer method.

Consequently, the transfer of the application proposed by the invention constitutes a trusted solution.

It is the transfer controller that assigns a particular predetermined piece of data intended for the destination device, in order to be able to identify this latter.

Such a solution allows a direct or an indirect transfer to the destination device. Thus, the destination device may receive application data. Accordingly, the destination device can store, at least in a temporary manner, the application data. The destination device can be identified notably with the assigned piece of identification data before running the application or letting the application run on another electronic device connected to the destination device.
Thus, the present invention proposes an alternative solution to the first known solution stated hereinabove that allows to issue an application in a controlled manner through a transfer controller.

Contrary to the first known solution, the present invention does not request, in particular, to be connected to a mobile radio telecommunication network in order to load (or transfer) data relating to an application, for example to a token, as a destination device. Since the present invention can be independent from a mobile radio telecommunication network, the present invention allows an application issuer to issue an application without needing the involvement of a mobile radio telecommunication operator that monitors such a mobile radio telecommunication network. Accordingly, when the concerned application relates to an application that is not purely related to a mobile radio telecommunication network, then an application issuer keeps a full control for the transfer of an application to a destination device, as recipient of the application data.

Likewise, contrary to the second known solution stated hereinabove, the present invention does suffer neither from any lengthy calculations including a scoring test, nor from any delay due to an account creation.

Furthermore, the proposed invention solution constitutes an instant issuance solution. As a matter of fact, such an instant issuance solution does not require to be connected OTA to a mobile radio telecommunication network, contrary to the known solutions, that need to wait for either a general update OTA campaign so that a SIM card, as a destination device, receives application data, or a delivery of post mail or the like. The transfer of application data of the present invention is therefore faster than the one of the known solution.

When the source device and the destination device are distinct, both store one and the same application. However, the source device and the destination device can be distinguished thanks to at least one different identification data. More precisely, the destination device is differentiable from the source device through a use of the piece of identification data or identification data that has been assigned by or through the transfer controller.

Nevertheless, it is to be noted that the source device and the destination device can be one and the same electronic device. In other words, the device from which the application data originates also constitutes the one for which the application data is intended.

It is to be noted that, when authorized, a transfer of the application data can be performed in a mode comprising two phases, namely a first phase consisting in a loading of the application code itself and a second phase consisting in a transfer of at least one piece of data relating to the destination device user. The piece(s) of data relating to the destination device user has(have) been assigned by or through the transfer controller. The piece(s) of data relating to the destination device user has(have) been generated by the transfer controller or on behalf of the transfer controller.

According to another aspect, the invention is a device for transferring at least one piece of application data to an external device, as a transfer controller. According to the invention, the device is adapted to receive from outside at least one item of information, process the item of information, and send or not to outside, according to a processing result, at least one piece of application data with at least one predetermined piece of identification data.

According to still another aspect, the invention is a system for transferring at least one piece of application data to an external device, as a transfer controller. According to the invention, the system is adapted to receive from outside at least one item of information, process the item of information, and send or not to outside, according to a processing result, at least one piece of application data with at least one predetermined piece of identification data.

### Brief description of the drawings:

Additional features and advantages of the invention will be more clearly understandable after reading a detailed description of one preferred embodiment, given as an indicative and not limitative example, in conjunction with the following drawings:
- Figure 1 illustrates a simplified diagram of an embodiment of a global system of electronic devices in which a transfer control electronic system is involved for transferring banking application data from a bank card with a magnetic stripe to a contactless bank smart card, according to the invention;
- Figure 2 is an embodiment of the transfer control electronic system of figure 1; and
- Figure 3 presents an organization chart representing an embodiment of a method for transferring banking application data from the bank card with a magnetic stripe to the contactless bank smart card through the transfer control system of figure 2.

### Detailed description of one embodiment:

Herein under is considered a system in which the invention method for transferring application data from a source electronic device to a destination electronic device is implemented.

However, it is only for exemplifying purposes and, as such, it is not to be considered to reduce the scope of the present invention.

It is to be noted that the solution is described for a banking application to be duplicated.

But it is also applicable to a use fidelity application, an electronic purse application, a token holder identity application and/or a transport application. These stated applications are known per se and are given only as examples.

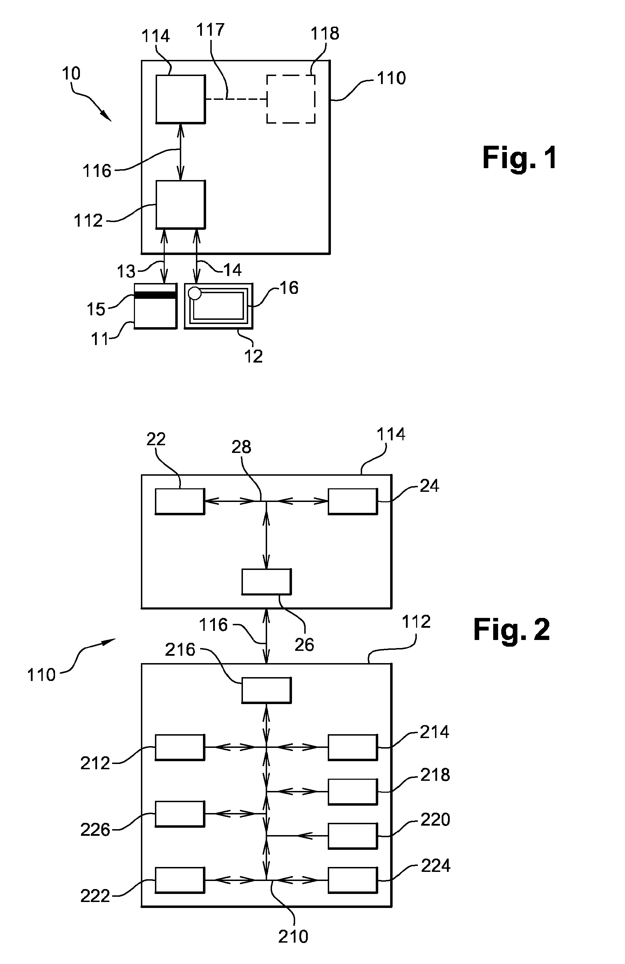

Figure 1 shows a global system 10 comprising a bank card 11 with a magnetic stripe 15, as a source device, a transfer control system 110, and a bank smart card 12 with an antenna 16, as a destination device.

As known per se, the bank card with a magnetic stripe, or termed magnetic stripe bank card 11, is a banking card comprises a medium made of plastic that integrates an ISO (for "International Organization for Standardization") formatted magnetic stripe 15. The magnetic stripe bank card possibly embeds a chip (not shown) like, for example, an EMV (acronym for "Europay, MasterCard and Visa) smart card, wherein the chip is not linked to the magnetic stripe. The medium has, among others, some user data. The user data are some items of information printed on the medium, some items of information embossed on the medium. The medium has also some security elements like a hologram on its front side and a cryptogram on its back side, so as to allow to authenticate the medium.

The chip of the bank card 11 comprises data processing means, namely at least one microprocessor, at least one memory, and one I/O interface that allows to communicate through contact pads with the exterior of the chip. The microprocessor is linked, through an internal data and control bus, to the memory and the I/O interface. The microprocessor, as the heart of the chip, processes, controls and internally communicates data, through the internal bus, with the other components incorporated within the chip. The microprocessor processes, controls and communicates data with outside through the I/O interface. The memory comprises at least one non-volatile memory and one volatile memory. The memory stores an operating system, and, in particular, data relating to the banking application and access rights given to allowed external entities. As allowed external entities, there is the transfer control electronic system 110 that owns the access rights for all the bank cards. The microprocessor executes the operating system. When requested from outside the chip, the microprocessor executes the banking application.

The banking application is an application that, when it is executed, affects an account number, or the like, through a banking operation or transaction with or without changing the corresponding credit value or debit value. The account number or the like is assigned, by a server managed by or on behalf of a bank, to a user that is the holder of the bank card 11. The banking application can be an EMV or a non-EMV payment application.

The bank card 11 can integrate one or several card authentication applications, like Static Data Authentication (or SDA), Dynamic Data Authentication (or DDA), and/or Combined Data Authentication (or CDA).

The bank card 11 can also integrate one or several user authentication applications, like a signature, an off-line Personal Identity Number (or PIN), an encrypted off-line PIN, an on-line PIN.

The banking application can include access procedures, e.g. a mutual authentication between the chip and an external entity, like the transfer control system 110, using an EMV mechanism, such as known per se, the Application Cryptogram generation, before accessing any data that are to be kept secret and relating to a bank account specific to its owner before notably any banking transaction.

The data to be kept secret are only known by the bank card 11 and the transfer control system 110.

The bank card 11 is carried by its owner, as a user. The user desires to duplicate the banking application already stored within the bank card 11 onto the contactless bank smart card 12. To duplicate the banking application means to copy the banking application onto another medium, as the destination device.

Preferably the source device and/or the destination device constitute(s) a secured element(s). Such a secured element(s) is(are) adapted to control access to at least some piece of data relating to an external interlocutor like the transfer control system 110 and protect the data against any external software and/or hardware attack. It can be any embedded electronic device that has a chip. The secured element verifies whether an external interlocutor has an access right to access data hosted within it. The secured element is able to authenticate the identity of the transfer control system 110, as its interlocutor, in order to grant or deny access to data stored within it. If the secured element discovers that the external interlocutor does not have any access right in comparison with at least one predetermined reference access right stored within the secured element, then the secured element forbids the external interlocutor to access data stored within it. On the contrary, if the secured element notes that the external interlocutor submits data matching with a predetermined or on-line calculated reference access right stored within the secured element, then the secured element authorizes the external interlocutor to access data.

The secured element can have different form factors. For example, the secured element is incorporated within a smart card, a removable and portable medium or token, a mass storage key like a USB key (acronym for "Universal Serial Bus") or a dongle of the USB type (which does not need any specific reader to communicate with the network access point, as host device).

The secured element can be inserted into a terminal, a device operating as a reader (like a magnetic reader, a chip contact reader, a chip contactless reader, a mobile phone), and/or a personal computer.

The contactless bank smart card 12 comprises, among others, a chip provided with an antenna 16, a contactless Input/Output (or I/O) interface to communicate with the exterior of the contactless bank smart card 12. The contactless I/O interface can use an RFID (for Radio-Frequency IDentification") and/or an NFC (acronym for "Near Field Communication") technology(ies) implementing a ISO 14 443 communication protocol.

As to the banking application data, there is at least one piece of data relating to a banking payment application, a prepaid credit application, a credit application and/or a debit application.

To duplicate the banking application, the user can have to go to a branch office (not represented) to which she or he can go to access her or his personal bank account. The user is registered as such before a bank managing her or his personal bank account.

According to the invention, the magnetic stripe bank card 11 firstly exchanges some item of information to be checked by the transfer control system 110 that prohibits or authorizes, according to a result of the check, to transfer the banking application data from the magnetic stripe bank card 11 to the contactless banking smart card 12 while assigning at least another predetermined piece of identification data to the contactless smart card 12.

The branch office is equipped with at least one host station 112. The host station 112 is linked through a bi-directional link 116 to a central authorization server 114.

The transfer control system 110 includes at least one host station 112 and the central authorization server 114. Only one host station 112 is represented for simplicity of presentation. However, several host stations can be present within the transfer control system 110 while there is only one central authorization server 114 to which all host stations are linked.

The transfer control system 110 is, as conductor, at the initiative of all orders sent to either the magnetic stripe bank card 11, as source device, or the contactless bank smart card 12, as destination device.

According to a preferential embodiment, the host station 112 and the central authorization server 114 are separate. The host station 112 is locally accessible (from outside) at a front office by a bank card user within the branch office. The central authorization server 114 is a remote server directly accessible (from outside) at a back-end office by an administrator relating to a bank company or on behalf of the bank company and indirectly accessible, i.e. through the host station 112, by an identified bank card user only for some data relating to her or his bank account number.

The bank card user can be guided by a clerk at the host station 112, in order to add control to the transfer of the banking application and, therefore, avoid any error for performing a copy of the banking application data.

Such a copy of the banking application data is proposed through a man machine interface provided by the host station 112.

When the contactless bank smart card 12, as destination device, is also the ownership of the magnetic stripe bank card holder or user, the host station 112 can be accessible also by the card holder itself for the transfer of the banking application data.

When the destination device is a new device (i.e. a device in progress of creation), the issuance and the transfer of the banking application code and user data are preferably performed, in a secure area, namely only accessible by an issuer employee(s).

In order that the transfer control system 110 be able to check the bank card identity and preferentially to authenticate it, the host station 112 firstly reads the magnetic stripe 15 of the bank card 11. Then, the host station 112 sends to the central authorization server 114, a piece of identification data, in an encrypted manner, such as a card identity verification cryptogram obtained from data identifying the bank card 11.

Naturally, such a piece(s) of identification data can be sent in a clear manner, i.e. without being encrypted, such as a Personal Account Number or card identification value.

The magnetic stripe 15 stores identification data relating to an account number. Preferably, the identification data accessible from the magnetic stripe 15 are read, so as to identify the magnetic stripe bank card 11 and the associated account number.

The piece of identification data is, for example, one or several of the following information items: a card number, an expiry date, a card holder's name, a Personal Account Number (or "PAN") and/or a Personal Account Number Sequence Number (or "PANSN").

When the piece(s) of identification data is(are) exchanged in an encrypted manner, the magnetic stripe bank card 11 and the transfer control system 110 use one common encryption algorithm and one decryption algorithm, like the Data Encryption Standard (or DES) or triple DES, to encrypt or decrypt the piece(s) of identification data with an encrypting key and a decrypting key. The encrypting and decrypting keys are stored within the magnetic stripe bank card 11 and the transfer control system 110.

When the magnetic stripe bank card 11, as source device, is not able to encrypt data, the host station 112 is preferably able to encrypt data before sending them to the central authorization server 114. For example, the host station 112 and the central authorization server 114 use SSL (acronym for Secure Sockets Layer) protocol, as a secure communication protocol.

To check an integrity and a genuine of data originating from the magnetic stripe bank card 11, a cryptogram value based on the data to be communicated can be retrieved from the magnetic stripe bank card 11.

Once the central authorization server 114 has received and validated the cryptogram value by comparing it with an expected cryptogram value, the central authorization server 114 can trust the magnetic stripe bank card 11 as a valid source device.

Likewise, to check an integrity and a genuine of the data originating from the transfer control system 110, a cryptogram value based on the data to be communicated can be generated by the transfer control system 110. Once the magnetic stripe bank card 11 has received and validated the cryptogram value by comparing it with an expected cryptogram value, the magnetic stripe bank card 11 can also trust the piece(s) of identification data that are transmitted by the transfer control system 110.

The central authorization server 114 accesses the whole bank account numbers assigned or to be assigned to bank cards.

Once the central authorization server 114 has received the piece of identification data originating from the magnetic stripe bank card 11, the central authorization server 114 is able to identify an associated bank account number.

When the central authorization server 114 identifies and preferably authenticates the considered magnetic stripe bank card 11, then the central authorization server 114 allows to send the banking application data to the contactless bank smart card 12.

Other conditions than the identification itself of the source device can be required by the central authorization server 114 to allow to send the banking application data to the contactless bank smart card 12. Among others, the central authorization server 114 can require, for example, that the identified magnetic stripe bank card 11 that stores the banking application is eligible to such an option, i.e to be able to duplicate the banking application, while other bank account numbers are not eligible to such an option, and/or that the identified magnetic tripe bank card 11 is the sole existing medium storing the banking application.

Moreover, a cardholder verification can be added to the invention process. Such a cardholder verification can be initiated from either the magnetic stripe bank card 11 itself or the central authorization server 114 itself.

Otherwise, namely when all the condition(s) required by the central authorization server 114 is(are) not satisfied, then the central authorization server 114 blocks any transmission of the banking application data to the contactless bank smart card 12.

For each bank account number, at least a piece of identification data relating to one magnetic stripe bank card 11 is registered within the central authorization server 114.

For each of the possibly eligible bank account numbers, a piece of identification data for one magnetic stripe bank card 11 is registered, as the source device, and an associated piece of identification data for one contactless bank smart card 12, as the destination device, is also registered within the transfer control system 110.

According to another embodiment (not represented), the application data is duplicated onto a single portable medium. In other words, the source device and the destination device constitute one and the same electronic device. For example, a magnetic stripe bank card that includes a chip and an antenna constitutes both the source and the destination devices. According to such an example, the magnetic stripe of the bank card is used to retrieve some identification data, and the antenna chip is provided with the banking application code, and other identification data, as user data, and, possibly, and the magnetic stripe is invalidated by or through the host station.

The central authorization server 114 determines the piece of identification data to be assigned to the destination device for one and the same identified bank account number.

To identify the contactless bank smart card 12, as destination device, the central authorization server 114 is suitable to generate (or calculate) a piece of identification data on-line, i.e. as soon as a transfer of the banking application has been requested from the host station 112.

To generate data intended for the contactless bank smart card 12, the central authorization server 114 receives from the magnetic stripe bank card 11 identification data about the bank card holder, and retrieves, based on the cardholder identification data, her or his account number and the corresponding cardholder specificities that are accessible from the central authorization server 114.

Due to the identification of the magnetic stripe bank card 11, the central authorization server 114 does not need to implement or let implement any complex calculation(s), any complex connection(s), such as a connection to a Card Management System, and/or any other host system to retrieve the cardholder identification data.

According to another embodiment, the central authorization server 114 is suitable to generate a piece of identification data off-line, i.e. the central authorization server 114 predetermines the piece of identification data to be assigned to the destination device for one and the same identified bank account number.

According to another embodiment, the central authorisation server 114 is connected, through a bi-directional link 117, to an identification generation server 118. The identification generation server 118 is dedicated to generate on-line or off-line the piece of identification data to be assigned to any destination device for at least one identified bank account number. The identification generation server 18 holds under control of the central authorisation server 114 a piece of identification data. The piece of identification data has been generated either in advance or as soon as the central authorisation server 114 submits a corresponding request. To get the generated piece of identification data intended for the contactless bank smart card 12, the central authorisation server 114 sends to the identification generation server 118 a request for being provided while accompanying it with the piece of identification data relating to the magnetic stripe bank card 11.

The generated piece of identification data intended for the contactless bank smart card 12 is associated with the identified bank account number that corresponds with the piece of identification data originating from the magnetic stripe bank card 11.

The generated piece of identification data can be one or several items of information among which there are a PAN, and/or a PANSN. The generated piece of identification data intended for the contactless bank smart card 12 can be a prefixed number, like for example a PANSN of value "99", or a number that is dependent from the piece of identification data relating to an existing EMV bank smart card 11, like for example a PANSN relating to the contactless bank smart card 12 is equal to the PANSN relating to the existing bank smart card 11 added to a prefixed value "1".

Optionally, other data is also added to the generated piece of identification data to be assigned to the contactless bank smart card 12 during the transfer of the banking application data, like for example a location identifier, an application transfer count, i.e. a tracking information is incremented each time a banking application transfer is effectively performed, a destination device identifier, a yield date and/or a yield machine identifier, i.e. a reference of the used host station 112.

The central authorization server 114 processes the received piece of identification data of the magnetic stripe bank card 11. The processing includes a check of all the conditions needed to authorize the transfer of the banking application.

The central authorization server 114 gets the predetermined piece of identification data associated with the bank account number identified from the received piece of identification data of the magnetic stripe bank card 11.

According to one preferred embodiment, when the central authorization server 114 has allowed the duplication of the banking application, the transfer control system 110 is involved, as an intermediary, for the transfer of the banking application between the magnetic stripe bank card 11 and the contactless bank smart card 12.

The central authorization server 114 and/or the host station 112 firstly collects the banking application data stored within the magnetic stripe bank card 11. Such a collect of the banking application can be implemented for example by accessing the magnetic stripe bank card 11 from the host station 112 through a contact link 13.

Once the transfer control system 110 has got the banking application data and stored within a memory accessible from it, the host station 112 transfers, the banking application data, and the assigned piece of identification data to the contactless bank smart card 12.

To carry out such a transfer, the host station 112 uses a contactless link 14, i.e. a short range radiofrequency link 14 (limited to about some ten centimeters), (compliant for example with the ISO 14 443 protocol) to transmit the stored banking application data to the contactless bank smart card 12 accompanied with its assigned piece of identification data.

The short range radiofrequency link comprises a ISO 14 443, NFC, Bluetooth or Wifi link or the like.

The transfer of the banking application is individual, i.e. specific to one identified bank account number, and also secure since it is under the full control of the transfer control system 110. Thus, the whole banking application data mediums, at least one for each banking application user, is under the control of transfer control system 110.

Preferentially, no wire is necessary to be connected between the host station 112 and the destination device. A connection of the magnetic stripe bank card 11 and the contactless bank smart card 12 to the transfer control system 110 being easy, the transfer of the banking application is convenient and user friendly.

Once the banking application has been transmitted, the magnetic stripe bank card 11 and the contactless bank smart card 12 incorporate both the banking application. Such an invention solution use allows to have a banking application stored within a bank smart card 12 that is accessible through a short range radiofrequency link, i.e. an access link not available on the concerned source device itself. A replacement of the existing bank card is thus rendered possible while changing its access mode (from a contact mode to a contactless mode).

Thus, the banking application incorporated within the contactless bank smart card 12 can be accessed, in a contactless manner, to run it, in order to pay a product or a service accessible through a radiofrequency link associated with the contactless bank smart card 12.

Figure 2 shows some components incorporated within the transfer control system 110.

All the components described in relation with the transfer control system 110 can be integrated within one and the same electronic device instead of several electronic devices included within the transfer control system 110. In other words, the functions of the host station 112 and the central authorization server 114 of the transfer control system 110 are gathered within one and the same electronic device, such as a Personal Computer (or PC).

The heart of the transfer control system 110 is the central authorization server 114. The central authorization server 114 includes data processing means 22, like at least one microprocessor, one or several memories 24, and at least one I/O interface 26 to communicate with outside the central authorization server 114.

The microprocessor 22 is connected through an internal data and control bus 28 to the memory 24, and the I/O interface 26.

The memory 24 stores an operating system, a list of pieces of identification data for bank cards associated with a list of bank account numbers already assigned or to be assigned to bank cards.

According to another embodiment, the central authorization server 114 is connected to one memory that is outside and stores identification data of the whole bank account numbers already assigned or to be assigned to bank cards.

According to the invention, the central authorization server 114 has a memory 24 storing a processing application for checking conditions to be satisfied to forbid or authorize to transfer of banking application data from the magnetic stripe bank card 11 to the contactless bank smart card 12 while assigning a piece of identification data to the addressee.

According to a preferred embodiment, the central authorisation server 114 includes a memory 24 storing encrypting, decrypting, signing, coding keys and encrypting, decrypting, signature, message authentication code calculation algorithms, like 3 DES, to encrypt, decrypt, sign and code message for authenticating data exchanged with outside, namely with all cards or token. The central authorization server 114 is thus able to encrypt, decrypt, sign, verify an integrity of data, generate keys from a master key and generate a cryptogram, in order to secure any exchange of data.

According to another embodiment, the central authorisation server includes a memory storing encrypting, decrypting, keys and encrypting, decrypting, algorithms, like 3 DES, to encrypt and decrypt, data exchanged with outside, namely with all cards or token.

The central authorisation server 114 includes a memory 24 storing a list of predetermined pieces of identification data which are also associated with a list of bank account numbers and to be assigned to the contactless bank smart cards as mediums of banking application, as destination devices, when applicable (i.e. when the conditions are satisfied).

According to another embodiment, the central authorization server includes means for storing banking application data.

The central authorization server 114 includes one I/O interface 26 that allows to exchange with outside through the bidirectional link 116.

A physical contact link constitutes the bidirectional link 116 between the host station 112 and the central authorization server 114.

The bi-directional link 116 is a secured link, for example a tunnelled link through a private communication network relating to a bank by which the banking application is managed and to which belongs the bank account numbers of the considered magnetic stripe bank card 11.

The central authorization server 114 can exchange data through the host station 112 with the contactless bank smart card 12 while using a scheme where the contactless bank smart card 12 plays a role of a client. An exchange protocol to be used between the contactless bank smart card 12, as client, and the central authorization server is, for example TCP/IP, (acronyms for "Transmission Control Protocol/ Internet Protocol") communication protocol, or UDP/IP (acronyms for User Datagram Protocol/ Internet Protocol").

The microprocessor 22 is adapted to receive from outside at least one item of information, process it, and, according to a processing result, send or not to outside at least one generated piece of identification data to be assigned to its addressee.

The process of the received item of information preferably consists in comparing the item(s) of information, item by item, with each identification data relating to bank cards (or token) integrating the banking application and associated with different bank account numbers. When the item of information is identified as being the PAN and/or the PANSN relating to an identified bank card (or token), then, if the identified bank card (or token) is eligible to a transfer of banking application as indicated through a corresponding first flag and if the identified bank card is the sole medium as indicated through a corresponding second flag, the microprocessor 22 is able to inform outside that the transfer of application data stored within the originator is allowed. Otherwise, i.e. either the item of information does not permit to identify any magnetic stripe bank card 11 or that the identified bank card (or token) is not eligible to a transfer of banking application or that the identified magnetic stripe bank card has already been the subject of one copy, the microprocessor 22 is able to inform outside that the transfer of application data stored within the originator is forbidden.

The item of information received from outside can be a cryptogram based on the piece of identification data relating to the bank card (or token) and an encrypting key. In such a case, the microprocessor 22 decrypts the cryptogram based on the corresponding decrypting key and decrypting algorithm before comparing it to each identification data (not encrypted) relating to one existing and furnished bank card (or token) comprised within a list.

According to another embodiment, each piece of identification data relating to one existing and furnished bank card comprised within a list is the cryptogram itself based on the piece of identification data relating to the bank card and an encrypting key, thus avoiding to store any decrypting key and decrypting algorithm within the memory 24 at the central authorisation server side.

The microprocessor 22 is adapted to select an appropriate access procedure depending notably on the type of the source device. More exactly, when the interlocutor is the magnetic stripe bank card 11 itself, at least one dedicated access procedure is executed, and when the interlocutor is assumed to be another allowed banking application medium, another dedicated access procedure is automatically executed.

The host station 112 consists of a terminal or a PC.

The host station 112 comprises data processing means 212, such as at least one microprocessor, at least one memory 214, at least one I/O interface 216 to communicate, through the bi-directional link 116, with the central authorisation server 114.

The host station 112 includes one memory 214 storing one or several procedures for accessing a bank card, as the source device.

According to another embodiment, the host station 112 accesses an external memory storing different procedures for accessing a bank card, as the source device. Such an external memory can be lodged within the central authorisation server 114.

Preferably, the host station 112 includes a memory 214 for storing the banking application data read from the magnetic stripe bank card 11, as source device, or sent by the central authorisation server 114.

The host station 112 includes a memory 214 storing one or several procedures for accessing a contactless bank smart card, as the destination device.

According to another embodiment, the host station 112 accesses an external memory storing different procedures for accessing a contactless bank smart card, as the destination device. Such an external memory can be lodged within the central authorisation server 114.

The host station 112 is provided with a man machine interface, in order to be able to exploit one service or application for transferring banking application from one source device to a destination device accessible through the host station 112. Such a service or application for transferring banking application originates or is authorized and activated from the central authorisation server 114.

The man machine interface preferably includes a display 218. The display 218 is used for visually informing a user. For example, the display 218 proposes through a displayed menu that includes one service by which the banking application data when stored within a magnetic stripe bank card, as one medium, is transferable to a contactless bank smart card, as another medium.

The user interacts with the man machine interface and operates the host station 112.

The man machine interface preferably comprises a key pad or a PIN pad 220 to enter typing information, and possibly a pointer (not represented), like a mouse, to point and/or select information.

Optionally, the host station 112 is provided with a finger print device (not represented), to enhance the security level for the transfer of the application data and identification data intended for the destination device.

The host station 112 is adapted to exchange data with the magnetic stripe bank card 11, as the source device. For example, the host station 112 comprises a reader 222 of a magnetic stripe adapted to read a card with a magnetic stripe.

Optionally, the host station 112 includes a contact reader 224 provided with contact pads compliant with ISO 7816 requirements corresponding to smart card contact pads provided on the bank card 11.

According to another embodiment, the host station 112 comprises one contact reader in order to read data from the source device and/or write data onto the destination device. Alternatively, the host station 112 comprises two contact readers, one contact reader for reading data from the source device, and another contact reader for writing data onto the destination device.

The host station 112 is able to read notably data allowing to identify the magnetic stripe bank card 11, by means of a magnetic field, from the magnetic stripe 15 provided on the bank card 11.

The host station 112 is adapted to directly and/or indirectly exchange data with the contactless bank smart card 12, as the destination device. For example, the host station 112 comprises a contactless reader 226 provided with an antenna able to communicate, through a short radiofrequency range link 14, with a corresponding contactless bank smart card 12 equipped with a NFC chip or the like.

The host station 112 can be provided with a bar code reader (not represented) allowing to read a bar code carried out by a source device, in order to identify it.

The microprocessor 212 is connected through an internal data and control bus 210 to the memory 214, the I/O interface 216, the display 218, the PIN pad 220, the magnetic stripe reader 222, the contact reader 224, and the contactless reader 226.

The host station 112 can comprise an infra-red port (not represented) requiring to present in direct line a corresponding infra-red port equipping a user equipment coupled with a source device and/or a destination device.

Optionally, the host station 112 includes a Wifi (registered trademark) (not represented) or Bluetooth (registered trademark) port (not represented) requiring to exchange through a corresponding Wifi or Bluetooth port equipping a user equipment coupled with a source device and/or a destination device.

According to another embodiment, the host station 112 is provided with a USB port for connecting a USB cable connected to a user equipment through a corresponding USB port, to communicate with a source device and/or a destination device.

The user equipment is thus used as a reader to exchange, in a transparent manner, with a source device and/or a destination device.

The host station 112 is able to load the banking application data to the contactless bank smart card 12 accompanied with its assigned piece(s) of identification data.

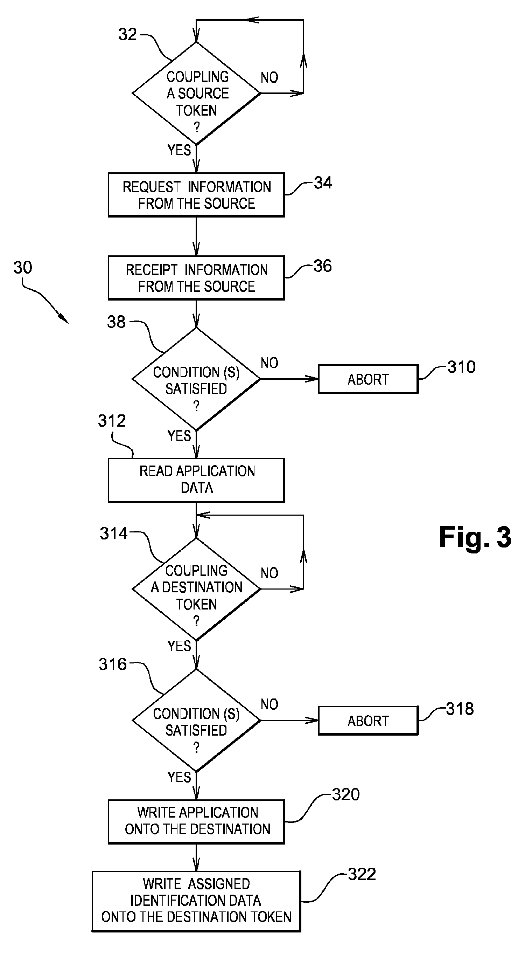

Figure 3 shows an organization chart representing an embodiment of a method 30 for transferring through the transfer control system 110 the banking application data from the magnetic stripe bank card 11 to the contactless bank smart card 12.

Firstly, a clerk at a bank office, couples 32 the magnetic stripe bank card 11 of a user to the transfer control system 110. Such a coupling is carried out, for example, by inserting the magnetic stripe bank card 11 into the reader 222 of a magnetic stripe provided within the host station 112. While no coupling of the magnetic stripe bank card 11 with the transfer control system 110 is detected, the host station 112 is not awaken and repeats a wait procedure until a coupling detection has occurred.

When a coupling of the magnetic stripe bank card 11 with the transfer control system 110 is detected, the host station 112 is then awaken.

When a service for transferring the banking application data from a bank card has been selected, the host station 112 activates a procedure for accessing a bank card.

According to another embodiment, the bank card cooperates with a removable and portable reader (not incorporated within the host station) that exchanges with the host station, through a short range radiofrequency link, as a contactless link, such as a Wifi or Bluetooth link. In such a case, the host station is equipped with appropriate means. The removable and portable reader is equipped with a magnetic stripe, a bar code and/or a chip contact reader. The host station has to exchange, through the removable and portable reader, with the banking card. In other words, the removable and portable reader forwards any request originating from the host station to the bank card and forwards any corresponding response originating from the bank card to the host station.

The host station 112 requests 34 from the magnetic stripe bank card 11 data for identifying it, i.e. without any encryption.

According to another embodiment, the host station 112 requests from the magnetic stripe bank card 11 data for authenticating the magnetic stripe bank card 11 resulting from data for identifying the magnetic stripe bank card 11, an encrypting algorithm, like 3 DES, and an encrypting key.

The central authorization server 114 receives 36 from the magnetic stripe bank card 11 identification data through the host station 112.

The central authorization server 114 processes the identification data relating to the magnetic stripe bank card 11.

More exactly, the central authorization server 114 verifies 38 whether the magnetic stripe bank card 11 does or does not satisfy at least one condition with respect to at least a reference data list relating to some bank cards allowed to be the subject of a duplication of their banking application data. Such a verification 38 consists in comparing a received item of information with a piece of reference data for each condition.

If the identification data originating from the magnetic stripe bank card 11 does not correspond with any data stored within the reference data list (scanned by the central authorization server 114), then the central authorization server 114 forbids any duplication of the banking application data assumed to be stored within the magnetic stripe bank card 11 by aborting 310 any further execution of the duplication process.

Optionally, the central authorization server 114 sends a message for informing a user that the magnetic stripe bank card 11 is not allowed to let its banking application data be copied. Such a message is translated, for example, by displaying, through the display 218 of the host station 112, a corresponding message for having failed to have corresponding duplication rights. No duplication of the banking application data is carried out when the magnetic stripe bank card 11 is not registered before the central authorization server 114.

On the contrary, i.e. when the identification data originating from the magnetic stripe bank card 11 does correspond with some data stored within the reference data list, then the central authorization server 114 authorizes one duplication of the banking application data stored within the magnetic stripe bank card 11.

According to another embodiment, when the identification data originating from the magnetic stripe bank card 11 does correspond with some data stored within the reference data list, then the central authorization server 114 authorizes one duplication of the banking application data stored within the central authorisation server.

Optionally, the central authorization server 114 sends a message for informing a user that the magnetic stripe bank card 11 is allowed to let its banking application data be copied. Such an authorization is translated, for example, by displaying, through the display 218, a corresponding message for having succeeded in having corresponding duplication rights.

Optionally, other condition(s) can be required to go further in the execution of the duplication. As to condition(s), it can be, among others, whether the magnetic stripe bank card 11 is eligible to such a duplication service option and/or whether the central authorisation server 114 has already been requested once for such a duplication service option while having performed an effective duplication of the banking application data. To know whether the banking application has already been the subject of a duplication (or copy), the transfer control system 110 reads the value of a flag stored within an accessible memory and associated with the identified magnetic stripe bank card 11 and/or the targeted contactless bank card (or token), as destination device. Such a flag value indicates whether a previous copy has been completely performed or not. The flag is set to a predefined first value (for example one bit set to value "zero") when the duplication has not already been allowed by the transfer control system 110, performed and possibly activated after an effective transfer of the banking application data. Once the duplication has already been allowed by the transfer control system, performed and possibly activated after an effective transfer of the banking application data, the flag value is changed to a predefined second value (for example one bit set to value "one").

As to another example of conditions, the central authorization server 114 requests the magnetic stripe bank card 11 to authenticate its user, in order to confirm her or his wish for duplicating the banking application. The user authentication procedure is then launched by requiring the user, through the display 218, to enter a PIN through the PIN Pad 220. Simultaneously, the host station 112 reads a cryptogram or a footprint relating to the expected PIN stored within the magnetic stripe bank card 11. Then, the host station 112 checks after a possible calculation whether entered data corresponds with the read cryptogram or footprint relating to the expected PIN.

According to another embodiment, the PIN is sent from the host station 112, in an encrypted manner, to the central authorization server 114, in order to compare the entered data with respect to an expected PIN stored within or accessible from the central authorization server 114.

When the entered data does not correspond with the PIN, then the host station 112 sends to the central authorization server 114 a message for informing it about a failure of the user authentication. In such a case, the central authorisation server 114 aborts 310 any further execution of the duplication process.

On the contrary, i.e. when the entered data corresponds with the PIN, then the host station sends to the central authorization server 114 a message for informing it about a success of the user authentication. In such a latter case, the central authorisation server 114 allows to go on with the execution of the duplication process.

Once the magnetic stripe bank card 11 has been authorized to be duplicated, the host station 112 reads 312 the banking application data stored within the magnetic stripe bank card 11 or stored within its memory 214 after a loading of the banking application data originating from the central authorisation server 114. The host station 112 preferably stores the banking application data within its memory 214.

Then, the user is prompted to couple 314 her or his contactless bank smart card 12 to the transfer control system 110. Such a coupling is carried out, for example, by sufficiently approaching the contactless bank smart card 12 from the contactless reader 226 provided within the host station 112.

While no coupling of the contactless bank smart card 12 with the transfer control system 110 is detected, the host station 112 is not awaken and repeats a wait procedure until a coupling detection has occurred.

When a coupling of the contactless bank smart card 12 with the transfer control system 110 is detected, the host station 112 is then awaken.

When a service for transferring the banking application data to a contactless bank smart card has been selected, the host station 112 activates a procedure for accessing a contactless bank smart card.

The central authorization server 114 preferably verifies 316 whether the contactless bank smart card 12 does or does not satisfy at least one condition.

In a preferred embodiment, such a verification 316 consists in requesting from the contactless bank smart card 12 through the host station 112 to authenticate its user, in order to confirm her or his wish for duplicating the banking application onto the contactless bank smart card 12. The user authentication procedure is then launched from the contactless bank smart card 12 by requiring the user, through the display of the host station, to enter a PIN through its PIN Pad 220. The entered data is checked by the contactless bank smart card 12 with respect to an expected PIN stored within the contactless bank smart card 12.

When the entered data does not correspond with the expected PIN, then the contactless bank smart card 12 sends to the central authorization server 114 a message for informing it about a failure of the user authentication. In such a case, the central authorisation server 114 aborts 318 any further execution of the duplication process.

On the contrary, i.e. when the entered data corresponds with the expected PIN, then the contactless bank smart card 12 sends to the central authorization server 114 a message for informing it about a success of the user authentication. In such a latter case, the central authorisation server 114 allows to go on with the execution of the duplication process.

Once the contactless bank smart card 12 has been authorized to be a medium for a copy of the banking application data stored within the magnetic stripe bank card 11, the host station 112 loads 320 onto the contactless bank smart card 12 the banking application data stored within its memory 214.

The host station 112 receives corresponding assigned identification data relating to the contactless bank smart card 12 from the central authorization server 114 while designating the bank account number designated by the identification data relating to the magnetic stripe bank card 11.

Then, in a preferred embodiment, the host station 112 directly loads 322 onto the contactless bank smart card 12 identification data relating to the contactless bank smart card 12.

Naturally, the two last steps can be in an converse order, namely the host station 112 firstly loads onto the contactless bank smart card 12 identification data relating to the contactless bank smart card 12 and transmitted from the central authorisation server 114, and the host station 112 secondly loads onto the contactless bank smart card 12 the banking application data (or banking application code) stored within the host station memory 214.

According to another embodiment, a bank smart card, as a source device, directly transmits, through a short range radiofrequency link, to the contactless bank smart card, as a destination device, the stored application and the corresponding assigned identification data intended for the contactless bank smart card and received from the central authorisation server through the host station. Such an embodiment avoids any reading of the banking application data by the host station reducing a time period needed for its transfer to the destination device.

According to still another embodiment, the source device only transmits, through a short range radiofrequency link, to the destination device the stored banking application while the transfer control system transmits, through a contact or a contactless link, to the destination device the assigned piece of identification data intended for the destination device.

Optionally, the host station 112 reads data stored within the contactless bank smart card 12 after the transfer of banking application data, so as to confirm that the transfer of the banking application has effectively occurred.

Optionally, the magnetic stripe bank card 11 is captured by the host station 112, i.e. is not given back to its user.

Optionally, once the banking application has been transferred to the contactless bank smart card 12, the transfer control system 110 deactivates or removes the banking application from the magnetic stripe bank card 11 preventing from being run on it.

Optionally, the transfer control system 110 activates the banking application that has just been transferred to the contactless bank smart card 12 for a possible limited use count and/or a possible limited use period.

Several uses of such a transfer of banking application can be contemplated, like a renewal of the bank card with or without chip, with or without new graphic data (such as a personal image) on the plastic medium, and/or a change of applicative medium.

According a particular use (not represented) of such a transfer of the banking application, a smart card of the Subscriber Identity Module (or SIM) type or the like constitutes a destination device. The destination device can have to cooperate with a host device (i.e. an handset with, for example, an embedded NFC chipset), in order to load the banking application to be duplicated.

As host device, it can also be any handheld computer, like a mobile phone, a Personal Digital Assistant (or PDA), a Voice over Internet Protocol handset and/or a mobile laptop.

Such a particular use allows to obtain, as a medium of the banking application, a mobile smart card that can be used:
- on the one hand, for being identified to use a mobile radiotelecommunication network with the functionality of the SIM type, and,
- on the other hand, for a banking operation or transaction through the mobile radiotelecommunication network and/or through a short range radiofrequency communication network independent from the mobile radiotelecommunication network, with the functionality of the banking application.

## Claims

1. A method (30) for transferring at least one piece of application data from a source device (11) to a destination device (12),
**characterized in that** the method comprises:
- a sending step in which the source device sends at least one item of information to a transfer control device;
- a processing step in which the transfer control device and/or another device connected to the transfer control device processes (38) the at least one item of information;
- according to a processing result, the transfer control device forbids (310) or authorizes to transfer at least one piece of application data to the destination device by providing the destination device with at least one predetermined piece of identification data.

2. Method according to claim 1, wherein the at least one item of information is based on at least one piece of identification data, the piece of identification data identifies a medium storing application data.

3. Method according to claim 1 or 2, wherein the processing step consists in:
- determining a piece of resulting data based on a predetermined algorithm and the at least one item of information, the predetermined algorithm or a corresponding inverse algorithm being stored by or accessible from the source device and the transfer control device and/or another device connected to the transfer control device; and
- comparing the piece of resulting data with a piece of reference data based on at least one piece of reference identification data.

4. Method according to claim 1 or 2, wherein the processing step consists in comparing the at least one item of information with at least one item of reference information.

5. Method according to any of claims 1 to 4, wherein the transfer control device transfers at least in part application data to the destination device.

6. Method according to any of claims 1 to 4, wherein the source device transfers at least in part application data to the destination device.

7. Method according to any of claims 1 to 6, wherein the application data comprises at least one piece of data relating to at least one element comprised within the following group:
- a banking payment application;
- a prepaid credit application;
- a credit application;
- a debit application;
- a use fidelity application;
- an electronic purse application;
- a token holder identity application; and/or
- a transport application.

8. Method according to any of claims 1 to 7, wherein the at least one predetermined piece of identification data comprises at least one element comprised within the following group:
- an Account Number; and/or
- an Account Number Sequence Number.

9. Method according to any of claims 1 to 8, wherein the method comprises a requesting step (34) in which the transfer control device requests the at least one item of information from the source device.

10. Method according to any of claims 1 to 9, wherein the method comprises a requesting step in which the source device requests the at least one item of information from another device.

11. Method according to any of claims 1 to 10, wherein the method comprises an authentication step in which a user of the source device and/or the destination device is requested to enter a Personal Identification Number, if entered data corresponds or does not correspond to a predetermined Personal Identification Number, then the source device, the destination device and/or the transfer control device forbids or authorizes to transfer at least one piece of application data to the destination device by providing the destination device with at least one predetermined piece of identification data.

12. Method according to any of claims 1 to 11, wherein the at least one item of information comprises at least one element comprised within the following group:
- a token number;
- an expiry date;
- a token holder's name;
- an Account Number; and/or
- an Account Number Sequence Number.

13. Method according to any of claims 1 to 12, wherein the transfer control device is connected to a server, as said other device, the server generating the at least one predetermined piece of identification data.

14. Method according to any of claims 1 to 13, wherein the transfer control device is connected to a first server, the first server being connected to a second server, as said other device, the second server generating the at least one predetermined piece of identification data.

15. Method according to any of claims 1 to 14, wherein the at least one predetermined piece of identification data is, for each predetermined piece of identification data, a prefixed number.

16. Method according to any of claims 1 to 15, wherein the at least one predetermined piece of identification data is, for each predetermined piece of identification data, a number that is a result dependent from the item of information.

17. Method according to any of claims 1 to 16, wherein at least one piece of marking data is added to the at least one predetermined piece of identification data during the transfer of application data to the destination device.

18. Method according to claim 17, wherein the at least one piece of marking data comprises at least one element comprised within the following group:
- a location identifier;
- an application transfer count;
- a destination electronic device identifier;
- a yield date; and/or
- a yield machine identifier.

19. Method according to any of claims 1 to 18, wherein the source device and the destination device comprise at least one element comprised within the following group :
- a token;
- a terminal;
- a reader, like a mobile telephone; and/or
- a personal computer.

20. A device for transferring at least one piece of application data to an external device,
**characterized in that** the device is adapted to:
- receive from outside at least one item of information;
- process the at least one item of information; and
- send or not to outside, according to a processing result, at least one piece of application data with at least one predetermined piece of identification data.

21. A system (110) for transferring application data to an external device,
**characterized in that** the system is adapted to:
- receive from outside at least one item of information;
- process the at least one item of information; and
- send or not to outside, according to a processing result, at least one piece of application data with at least one predetermined piece of identification data.

22. System according to claim 21, wherein the system comprises at least one element comprised within the following group:
- a token;
- a server;
- a terminal;
- a reader; and/or
- a personal computer.
